# EUROPÄISCHE PATENTSCHRIFT

(11) **EP 3 484 770 B1**
(45) Veröffentlichungstag und Bekanntmachung des Hinweises auf die Patenterteilung: **14.10.2020**
(21) Anmeldenummer: 17748622.2
(22) Anmeldetag: 21.06.2017
(51) Int. Cl.: B64F 1/31, B66F 11/04

(54) **TRANSPORTFAHRZEUG**
TRANSPORT VEHICLE
VÉHICULE DE TRANSPORT

(30) Priorität: 22.06.2016 AT 505672016
(43) Veröffentlichungstag der Anmeldung: 22.05.2019
(73) Patentinhaber: BULMOR Holding GmbH, 1110 Wien (AT)
(72) Erfinder: SCHÜTZENEDER, Herbert, 4322 Windhaag bei Perg (AT)
(74) Vertreter: Burger, Hannes
(86) Internationale Anmeldenummer: PCT/AT2017/060157
(87) Internationale Veröffentlichungsnummer: WO 2017/219057

(56) Entgegenhaltungen:
- EP-A1- 0 018 486
- WO-A1-2008/104390
- DE-A1- 10 013 083
- DE-U1- 29 916 236
- US-A- 5 322 408
- US-A- 5 499 694

## Beschreibung

Die Erfindung betrifft ein selbstfahrendes Transportfahrzeug, insbesondere zum Transport von Personen.

Aus der US 5,322,408 B und der US 5,499,694 B sind verfahrbare Hubvorrichtungen mit einer Plattform für Personen bekannt.

Die aus der US 5,322,408 B und der US 5,499,694 B bekannten Hubvorrichtungen für Personen weisen den Nachteil auf, dass besonders Personen in einem Rollstuhl nur erschwert auf die Plattform der Hubvorrichtungen gelangen können.

Die EP 0 018 486 A1 offenbart einen LKW der eine Nutzlastkabine aufweist, die angehoben werden kann und an ein Flugzeug andockbar ist. Die Nutzlastkabine ist hinter dem Fahrerhaus angeordnet.

Die DE 100 13 083 A1 offenbart ein Flurförderzeug mit einer Aufnahmegabel, die in vertikaler Richtung verschiebbar ist und bis auf den Boden absenkbar ist. Ein Fahrerhaus ist hinter der Aufnahmegabel angeordnet.

Die DE 299 16 236 U1 offenbart eine mobile Vorrichtung für behinderte Personen, die eine Transportplattform aufweist, welche bis auf den Boden abgesenkt werden kann. Die Person, welche die Vorrichtung bedient steht hinter der Vorrichtung und muss dieser fußgebunden folgen.

Die WO 2008/104390 A1 offenbart einen LKW, welcher eine Hubplattform aufweist. Die Hubplattform kann aus einer rückwärtigen Fahrzeugöffnung ausgefahren werden.

Aufgabe der vorliegenden Erfindung war es, die Nachteile des Standes der Technik zu überwinden und eine Hubvorrichtung zur Verfügung zu stellen, mittels derer ein Benutzer erleichtert transportiert werden kann.

Diese Aufgabe wird durch ein Fahrzeug gemäß den Ansprüchen gelöst.

Erfindungsgemäß ist ein selbstfahrendes Transportfahrzeug ausgebildet. Das Transportfahrzeug umfasst ein Fahrgestell, welches sich bezüglich dessen Länge in einer Fahrtrichtung erstreckt und bezüglich dessen Breite quer zur Fahrtrichtung erstreckt, wobei zumindest drei Räder am Fahrgestell angeordnet sind, welche Räder im ungelenkten Zustand in Fahrtrichtung ausgerichtet sind; eine Energiebereitstellungsvorrichtung, welche im Fahrgestell aufgenommen ist; eine Hubvorrichtung, welche mit dem Fahrgestell gekoppelt ist; eine Transportplattform welche mittels der Hubvorrichtung in vertikaler Richtung relativ zum Fahrgestell zwischen einer abgesenkten Stellung und einer angehobenen Stellung verschiebbar ist. Die Transportplattform ist in Fahrtrichtung relativ zum Fahrgestell zwischen einer Aufnahmestellung und einer Transportstellung verschiebbar.

Von Vorteil an der erfindungsgemäßen Ausbildung des Transportfahrzeuges ist, dass durch die Verschiebbarkeit der Transportplattform relativ zum Fahrgestell erreicht werden kann, dass die Transportplattform zum Beladen und Entladen auf den Boden abgesenkt werden kann, oder um beispielsweise an ein Flugzeug andocken zu können. In der Transportstellung kann die Transportplattform über dem Fahrgestell positioniert werden, um während dem Fahren einen möglichst niedrigen und zentralen Gesamtschwerpunkt des Transportfahrzeuges zu erreichen und somit die Kippstabilität und damit auch die Fahrzeugsicherheit erhöhen zu können.

Weiters kann es zweckmäßig sein, wenn die Transportplattform in der Aufnahmestellung in Fahrtrichtung gesehen vor oder hinter dem Fahrgestell auf den Untergrund absenkbar ist. Von Vorteil ist hierbei, dass dadurch die Transportplattform für den erleichterten Zustieg von mobilitätseingeschränkten Personen, wie etwa Rollstuhlfahrern, geeignet ist. Insbesondere können durch diese Maßnahme mobilitätseingeschränkte Personen ohne dem Überwinden von hohen Stufen vom Untergrund aus in die Transportplattform einsteigen.

Ferner kann vorgesehen sein, dass die Transportplattform in der Transportstellung zumindest bereichsweise innerhalb der projizierten Grundfläche des Fahrgestells aufgenommen ist. Von Vorteil ist hierbei, dass durch diese Maßnahme der Schwerpunkt der Transportplattform möglichst weit innerhalb des Fahrgestelles gelegt werden kann und dadurch die Stabilität des Transportfahrzeuges verbessert wird.

Darüber hinaus kann vorgesehen sein, dass die Transportplattform in der Transportstellung zumindest zu 70%, bevorzugt zur Gänze, innerhalb der projizierten Grundfläche des Fahrgestells aufgenommen ist und oberhalb dem Fahrgestell angeordnet ist. Von Vorteil ist hierbei, dass zum einen während dem Fahrbetrieb der Schwerpunkt der Transportplattform zentral über die Grundfläche des Fahrgestells gebracht werden kann. Zum anderen wird durch diese Ausbildung die Transportplattform durch das Fahrgestell umgrenzt. Dadurch wird die Transportplattform durch das Fahrgestell beispielsweise beim Anprall auf ein Hindernis geschützt. Darüber hinaus kann durch diese Maßnahme in der Transportstellung das Außenmaß des Transportfahrzeuges möglichst gering gehalten werden, um die Wendigkeit und die Flexibilität des Transportfahrzeuges zu erhöhen.

Vorteilhaft ist auch eine Ausprägung, gemäß welcher vorgesehen sein kann, dass ein Verstellweg der Transportplattform zwischen der Aufnahmestellung und der Transportstellung zwischen 30% und 200%, insbesondere zwischen 50% und 100%, bevorzugt zwischen 65% und 95% der Länge des Fahrgestells beträgt. Durch die Wahl des Verstellweges in diesem Größenbereich kann erreicht werden, dass die Transportplattform ausreichend gegenüber dem Fahrgestell verschoben werden kann, um einen sicheren Transport der Personen in der Transportstellung zu gewährleisten und dabei ein erleichtertes Einsteigen in die Transportplattform erreichen zu können.

Gemäß einer Weiterbildung ist es möglich, dass die Transportplattform bezüglich einer Hochachse relativ zum Fahrgestell verdrehbar ist. Von Vorteil ist hierbei, dass die Transportplattform beispielsweise zum Andocken an ein Flugzeug gedreht werden kann, um diese an die Form des Rumpfes anpassen zu können.

Ferner kann es zweckmäßig sein, dass die Transportplattform koppelbar an der Hubvorrichtung angeordnet ist und dadurch verschiedene Transportplattformen an der Hubvorrichtung aufnehmbar sind. Von Vorteil ist hierbei, dass ein und dasselbe Transportfahrzeug beispielsweise eine Transportplattform mit geschlossener Kabine zum Transport von Fluggästen aufnehmen kann und dass an dasselbe Transportfahrzeug beispielsweise eine offene Transportplattform zum Aufnehmen von Wartungspersonal gekoppelt werden kann.

Darüber hinaus kann vorgesehen sein, dass ein Führerstand zum Steuern des selbstfahrenden Transportfahrzeuges an der Transportplattform angeordnet ist. Von Vorteil ist hierbei, dass das Bedienpersonal zum Lenken des Transportfahrzeuges sich direkt an der Transportplattform befinden kann und somit einen guten Überblick über die Transportplattform und die darauf transportierten Personen bzw. Ladegüter haben kann.

Weiters kann vorgesehen sein, dass als Antriebsmittel zum Verschieben der Transportplattform relativ zum Fahrgestell, an diesem ein zwischen einer Umlenkrolle und einer Antriebsrolle gespanntes Zugmittel, insbesondere Zahnriemen, angeordnet ist und dass die Hubvorrichtung mit dem Zugmittel gekoppelt ist und mittels diesem relativ zum Fahrgestell zwischen der Aufnahmestellung und der Transportstellung verschiebbar ist. Weiters kann vorgesehen sein, dass Zugmittel zwischen zwei Umlenkrollen gespannt ist und von einem Antriebsmittel, wie etwa einer weiteren Antriebsrolle angetrieben wird. Von Vorteil ist hierbei, dass ein derartiges Zugmittel einfach und kostengünstig in der Herstellung ist und darüber hinaus eine hohe Positioniergenauigkeit aufweist.

Gemäß einer besonderen Ausprägung ist es möglich, dass die Hubvorrichtung teleskopierbar ausgebildet ist. Von Vorteil ist hierbei, dass durch die teleskopierbare Hubvorrichtung die maximale Hubhöhe der Personentransportvorrichtung gesteigert werden kann, ohne dabei jedoch die Gesamthöhe des Transportfahrzeuges im Fahrzustand erhöhen zu müssen.

Entsprechend einer vorteilhaften Weiterbildung kann vorgesehen sein, dass am Fahrgestell ein Schienensystem angeordnet ist und dass an der Hubvorrichtung ein Führungsschlitten mit zumindest vier Führungsrollen angeordnet ist, welche mit dem Schienensystem zusammenwirken. Von Vorteil ist hierbei, dass ein derartiges Schienensystem, welches mit einem Führungsschlitten zusammenwirkt, einfach und kostengünstig herzustellen ist und darüber hinaus ein hoher Verschiebeweg mittels dem Führungsschienensystem erreicht werden kann.

Insbesondere kann es vorteilhaft sein, wenn am Fahrgestell eine Plattformebene ausgebildet ist oberhalb welcher die Transportplattform in der Transportstellung angeordnet ist, wobei die Plattformebene oberhalb sämtlicher Räder angeordnet ist. Von Vorteil ist hierbei, dass die Plattformebene oberhalb sämtlicher Räder angeordnet ist und somit die Transportplattform eine maximale Breite aufweisen kann, welche der Breite des Fahrgestelles entspricht oder welche über die Breite des Fahrgestelles ausgeht.

Ferner kann vorgesehen sein, dass am Fahrgestell ein vorderes Radpaar und ein hinteres Radpaar angeordnet ist, wobei zumindest eines der Radpaare lenkbar ist. Von Vorteil ist hierbei, dass das Fahrgestell durch das vordere Radpaar und das hintere Radpaar im Gegensatz zum Einsatz von nur drei Rädern eine möglichst breite Kippkante aufweist und dadurch die Sicherheit des Transportfahrzeuges erhöht wird.

Darüber hinaus kann vorgesehen sein, dass die Energiebereitstellungsvorrichtung zwischen dem vorderen Radpaar und dem hinteren Radpaar und unterhalb der Plattformebene am Fahrgestell angeordnet ist. Von Vorteil ist hierbei, dass durch diese Maßnahme der Schwerpunkt des Fahrgestelles möglichst zentral und tief am Fahrgestell gehalten werden kann, sodass die Kippstabilität des Transportfahrzeuges verbessert werden kann.

Vorteilhaft ist auch eine Ausprägung, gemäß welcher vorgesehen sein kann, dass die Transportplattform in Transportstellung auf der Plattformebene oder auf dem Schienensystem abstellbar ist. Durch diese Maßnahme kann erreicht werden, dass zum Fahren des Transportfahrzeuges die Transportplattform auf der Plattformebene abgestellt werden kann und es somit durch die Fahrbewegung zu keinen Bewegungen oder Schwingungen der Transportplattform relativ zum Fahrgestell kommt. Darüber hinaus kann durch diese Maßnahme vermieden werden, dass im Falle des Gebrechens der Hubvorrichtung während dem Fahren des Transportfahrzeuges die Transportplattform auf das Fahrgestell bzw. auf den Boden fällt. Außerdem kann die Belastung, welche von der Transportplattform auf die Hubvorrichtung wirkt, während dem Verfahren des Transportfahrzeuges vermindert werden.

Gemäß einer Weiterbildung ist es möglich, dass die Breite des Fahrgestells zwischen 50% und 100%, insbesondere zwischen 60% und 90%, bevorzugt zwischen 65% und 75% der Länge des Fahrgestells beträgt. Von Vorteil ist hierbei, dass ein Fahrgestell mit einem derartigen Verhältnis von Länge zu Breite ein vorteilhaftes Raumangebot bei hoher Kippstabilität des Transportfahrzeuges aufweisen kann.

Ferner kann es zweckmäßig sein, wenn an der Transportplattform in Fahrtrichtung gesehen vorne eine Einstiegsöffnung angeordnet ist. Von Vorteil ist hierbei, dass das Transportfahrzeug in Fahrtrichtung an ein Übergabeobjekt, beispielsweise ein Flugzeug, herangefahren werden kann und an dieses angedockt werden kann.

Darüber hinaus kann vorgesehen sein, dass an der Transportplattform eine Andockrampe angeordnet ist, welche relativ zur Transportplattform in Fahrtrichtung verschiebbar ist. Von Vorteil ist hierbei, dass eine derartige Andockrampe dazu dienen kann, um einen Übergang zwischen der Transportplattform und dem Flugzeug herstellen zu können.

Weiters kann vorgesehen sein, dass die Transportplattform relativ zum Fahrgestell quer zur Fahrtrichtung verschiebbar ist. Von Vorteil ist hierbei, dass durch diese Maßnahme die Transportplattform seitlich bezüglich dem der Andockstelle bzw. der Arbeitsposition verschoben werden kann und somit bei ungenauer seitlicher Positionierung des Transportfahrzeuges relativ zur Andockstelle bzw. der Arbeitsposition diese ungenaue Positionierung ausgeglichen werden kann.

Gemäß einer besonderen Ausprägung ist es möglich, dass die Hubvorrichtung eine mechanische Sicherung aufweist, mittels welcher die Transportplattform gegen Herabfallen im Falle des Versagens des Antriebssystems gesichert werden kann. Von Vorteil ist hierbei, dass durch diese Maßnahme die Personensicherheit der Transportplattform erhöht werden kann.

Weiters kann vorgesehen sein, dass am Fahrgestell Stützfüße angeordnet sind. Die Stützfüße sind vorzugsweise möglichst weit am Rand des Fahrzeuges angeordnet, um die Stützfunktion zu erhöhen. Insbesondere kann vorgesehen sein, dass die Stützfüße ausgefahren werden, wenn die Transportplattform angehoben werden soll. Dadurch kann die Kippstabilität des Transportfahrzeuges erhöht werden.

Weiters kann vorgesehen sein, dass am Fahrgestell eine Aufstiegsleiter angeordnet ist, um auch in der Transportstellung auf die Transportplattform gelangen zu können.

Weiters kann vorgesehen sein, dass an der Unterseite der Transportplattform ein Fixierelement angeordnet ist, welches mit einem am Fahrgestell angeordneten Gegenelement zusammenwirkt. Dadurch kann die Transportplattform in der Transportstellung gesichert werden und somit verhindert werden, dass bei einem abrupten Abbremsmanöver die Transportplattform ungewollt relativ zum Fahrgestell nach vorne geschoben wird.

Weiters kann vorgesehen sein, dass das Transportfahrzeug mittels einem Übertragungsmittel von einer vom Transportfahrzeug entfernten Position aus steuerbar ist. Von Vorteil ist hierbei, dass das Transportfahrzeug von einem fixen Standort aus gesteuert werden kann. Hierbei kann vorgesehen sein, dass das Transportfahrzeug mittels einer Fernsteuerung von einer Person gesteuert wird. Alternativ dazu kann vorgesehen sein, dass das Transportfahrzeug eine vorbestimmte Route abfährt und beispielsweise von einem Rechner gesteuert wird.

Weiters kann vorgesehen sein, dass das Fahrgestell eine Federung und wahlweise eine Dämpfung aufweist. Von Vorteil ist hierbei, dass durch die Federung und die Dämpfung die Laufruhe des Fahrzeuges beim Verfahren erhöht wird. Dies bringt insbesondere beim Transport von Personen eine Erhöhung des Komforts mit sich. Die Federung und die Dämpfung können zwischen den Rädern bzw. Achsaufhängungen und Fahrgestell angeordnet sein.

Ferner kann vorgesehen sein, dass ein Abstand zwischen zumindest einem der Räder und dem Fahrgestell aktiv verstellbar ist. Von Vorteil ist hierbei, dass durch diese Maßnahme das Fahrgestell ausnivelliert werden kann. Dies kann insbesondere beim Anheben der Transportplattform notwendig sein, um die Stabilität des Transportfahrzeuges zu erhöhen.

Weiters kann vorgesehen sein, dass die Transportplattform derart mit der Hubvorrichtung gekoppelt ist, sodass die Transportplattform relativ zur Hubvorrichtung seitlich verschiebbar ist und/oder sodass die Transportplattform relativ zur Hubvorrichtung verschwenkbar ist sodass die Transportplattform relativ zur Hubvorrichtung um eine horizontale Achse verschwenkbar ist. Von Vorteil ist hierbei, dass durch diese Maßnahme erreicht werden kann, dass die Transportplattform an die Andockstelle bzw. Arbeitsposition angepasst werden kann. Eine Verschwenkbarkeit der Transportplattform relativ zur Hubvorrichtung bezüglich der vertikalen Achse kann beispielsweise dadurch realisiert werden, dass die Transportplattform mittels einer Lagerung mit vertikaler Achse, wie etwa einem Bolzen am Laufwagen der Hubvorrichtung angeordnet ist. Eine Verschiebbarkeit der Transportplattform relativ zur Hubvorrichtung kann beispielsweise dadurch realisiert werden, dass zwischen der Transportplattform und dem Laufwagen der Hubvorrichtung eine horizontale Führungsschiene ausgebildet ist. Eine Verschwenkbarkeit der Transportplattform relativ zur Hubvorrichtung bezüglich der horizontalen Achse kann beispielsweise dadurch realisiert werden, dass die Transportplattform mittels einer Lagerung mit horizontaler Achse, wie etwa einem Drehgelenk am Laufwagen der Hubvorrichtung angeordnet ist.

Darüber hinaus kann vorgesehen sein, dass die Hubvorrichtung ein Federungs- und optional ein Dämpfungssystem aufweist mittels welchem vertikale Stöße zwischen Fahrgestell und Transportplattform gefedert bzw. gedämpft werden können. Durch diese Maßnahme kann erreicht werden, dass bei Bewegung des Transportfahrzeuges mit angehobener Transportplattform übermäßige Schläge bzw. Schwingungen an der Transportplattform vermieden werden können. Somit kann das Transportfahrzeug auch mit angehobener Transportplattform bewegt werden.

Weiters kann vorgesehen sein, dass die Andockrampe segmentiert ist und ein vertikales Drehgelenk aufweist, wobei das vordere Segment der Andockrampe bezüglich dem hinteren Segment der Andockrampe verschwenkbar ist. Dadurch kann eine Anpassung des vorderen Segmentes der Andockrampe an die Andockstelle bzw. Arbeitsposition angepasst werden kann.

Weiters kann vorgesehen sein, dass das Transportfahrzeug genau drei Räder aufweist.

Darüber hinaus kann vorgesehen sein, dass die Plattformebene zumindest 13 Zoll über dem Untergrund angeordnet ist. Dadurch kann eine ausreichende Funktionalität des Transportfahrzeuges erreicht werden.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines Transportfahrzeuges, wobei sich eine Transportplattform in einer Transportstellung befindet;
- Fig. 2: eine perspektivische Ansicht des Transportfahrzeuges, wobei sich die Transportplattform in einer Aufnahmestellung befindet;
- Fig. 3: eine perspektivische Ansicht des Transportfahrzeuges, wobei sich die Transportplattform in einer Übergabestellung befindet;
- Fig. 4: eine perspektivische Ansicht des Transportfahrzeuges, die Transportplattform und das Fahrgestell in einer Explosionsdarstellung gezeigt sind;
- Fig. 5: eine perspektivische Ansicht eines weiteren Ausführungsbeispiels des Transportfahrzeuges mit offener Transportplattform, wobei sich die Transportplattform in der Transportstellung befindet;
- Fig. 6: eine perspektivische Ansicht einer Andockrampe, welche Bestandteil des angegebenen Transportfahrzeuges sein kann.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

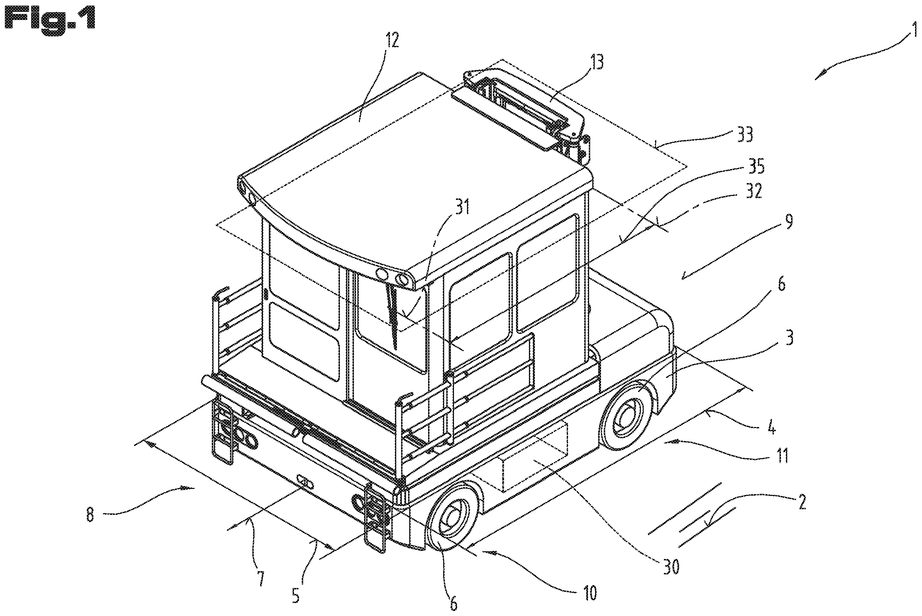

Fig. 1 zeigt eine perspektivische Ansicht eines selbstfahrenden Transportfahrzeuges 1. Ein derartiges Transportfahrzeug 1 wie es in Fig. 1 dargestellt ist, kann beispielsweise auf Flughäfen zum Einsatz kommen, um mobilitätseingeschränkte Personen vom Untergrund 2 aufzunehmen und zu einer Öffnung im Flugzeug befördern zu können. Neben dem Einsatz auf Flughäfen kann das Transportfahrzeug 1 natürlich auch überall sonst eingesetzt werden, wo das Befördern von Personen vom Untergrund 2 auf eine höherliegende Ebene notwendig ist. Neben dem Einsatz des Transportfahrzeuges 1 zum Transport von Personen ist es natürlich auch denkbar, dass das Transportfahrzeug 1 ausschließlich zum Transport von Gegenständen verwendet wird.

Das Transportfahrzeug 1 weist ein Fahrgestell 3 auf, welches sich über eine Länge 4 und eine Breite 5 erstreckt. Außerdem sind am Fahrgestell 3 zumindest drei Räder 6 angeordnet, welche zum Fortbewegen des Fahrgestells 3 dienen. Die Räder 6 sind im ungelenkten Zustand in einer Fahrtrichtung 7 ausgerichtet, sodass sich das Transportfahrzeug 1 in Fahrtrichtung 7 bewegen kann. Die Fahrtrichtung 7 verläuft parallel zur Länge 4 des Fahrgestells 3.

Die Länge 4 des Fahrgestells 3 kann beispielsweise zwischen 2m und 8m, insbesondere zwischen 3m und 5m, bevorzugt zwischen 3,5m und 4,5m betragen.

Die Breite 5 des Fahrgestells 3 kann beispielsweise zwischen 1,5m und 4m, insbesondere zwischen 2m und 3m, bevorzugt zwischen 2,3m und 2,8m betragen

Grundsätzlich ist es natürlich denkbar, dass sich das Transportfahrzeug 1 in beide Richtungen, sowohl vorwärts als auch rückwärts, gleichermaßen bewegen kann. Es hat sich jedoch als praktikabel erwiesen, wenn das Transportfahrzeug 1 vorwiegend in eine Richtung, nämlich in Fahrtrichtung 7, bewegt wird. Durch die Definition der Fahrtrichtung 7 ergeben sich auch eine Vorderseite 8 und eine Hinterseite 9 des Transportfahrzeuges 1.

Wie aus Fig. 1 weiters ersichtlich, kann vorgesehen sein, dass am Fahrgestell 3 vier Räder 6 angeordnet sind, wodurch ein vorderes Radpaar 10 und ein hinteres Radpaar 11 ausgebildet sind. Die einzelnen Räder 6 des vorderen Radpaares 10 oder des hinteren Radpaares 11 können beispielsweise mittels einer Einzelradaufhängung am Fahrgestell 3 angeordnet sein. In einer weiteren Ausführungsvariante ist es denkbar, dass sowohl das vordere Radpaar 10 als auch das hintere Radpaar 11 jeweils an einer Starrachse angeordnet sind.

In wieder einem anderen Ausführungsbeispiel ist es denkbar, dass das vordere Radpaar 10 an einer Starrachse angeordnet ist und das hintere Radpaar 11 an einer am Fahrgestell 3 pendelnd angeordneten Achse angeordnet ist.

In wieder einem anderen Ausführungsbeispiel ist es auch denkbar, dass sowohl das vordere Radpaar 10 als auch das hintere Radpaar 11 an einer pendelnd am Fahrgestell 3 aufgenommenen Achse angeordnet sind, wobei Stellmittel, beispielsweise in Form von Hydraulikzylindern vorgesehen sein können, welche außerhalb des Drehpunktes zwischen pendelnd aufgehängter Achse und Fahrgestell 3 angeordnet sind und über welche somit ein Winkel zwischen der Pendelnd angeordneten Achse und dem Fahrgestell 3 einstellbar ist. Dabei ist es denkbar, dass der Drehpunkt zwischen pendelnd angeordneter Achse und Fahrgestell 3 entweder mittig der Breite 5 oder alternativ auch an einer Seite des Fahrgestells 3 liegt.

Unabhängig von der Aufnahme der Räder 6 am Fahrgestell 3 kann vorgesehen sein, dass die Räder 6 des vorderen Radpaares 10 lenkbar sind.

In einer weiteren Ausführungsvariante kann vorgesehen sein, dass die Räder 6 des hinteren Radpaares 11 lenkbar sind.

In wieder einer anderen Ausführungsvariante kann vorgesehen sein, dass sowohl die Räder 6 des vorderen Radpaares 10 als auch die Räder 6 des hinteren Radpaares 11 lenkbar sind. Ein Transportfahrzeug 1 mit einer Lenkung sowohl am vorderen Radpaar 10 als auch am hinteren Radpaar 11 weist eine sehr hohe Flexibilität und Wendigkeit auf.

Die einzelnen Räder 6 können vorzugsweise eine Dimensionierung von zumindest 12 Zoll aufweisen, um eine Geländegängigkeit des Transportfahrzeuges 1 erreichen zu können. Dabei kann vorgesehen sein, dass die Räder 6 mit Luft oder mit einem gummielastischen Material geringer Dichte, wie etwa Polyurethanschaum, gefüllt sind.

In einer Alternativvariante kann vorgesehen sein, dass die Räder 6 in Form von Vollgummirädern ausgebildet sind, um einen Luftverlust und somit die Gefahr des Kippens des Transportfahrzeuges 1 unterbinden zu können.

Weiters kann vorgesehen sein, dass die Vollgummiräder Ausnehmungen zur Dämpfung der Räder aufweisen.

In einer weiteren Ausführungsvariante kann auch vorgesehen sein, dass die Räder aus verschiedenen Schichten aufgebaut sind und beispielsweise eine Innere Lage aus einem harten Gummimaterial, eine Zwischenlage aus einem weicheren Material und eine Außenlage wieder aus einem härteren und verschleißfesten Material aufweisen.

In wieder einer anderen, nicht dargestellten Ausführungsvariante ist es auch denkbar, dass ein vorderes Radpaar 10 ausgebildet ist und dass an der Hinterseite 9 des Fahrgestells 3 ein einzelnes Rad 6 angeordnet ist.

Weiters ist eine Transportplattform 12 vorgesehen, welche mittels einer Hubvorrichtung 13 mit dem Fahrgestell 6 gekoppelt ist.

Die Transportplattform 12 kann, wie in Fig. 1 dargestellt, eine geschlossene Kabine aufweisen oder kann alternativ auch als offene Plattform ausgebildet sein.

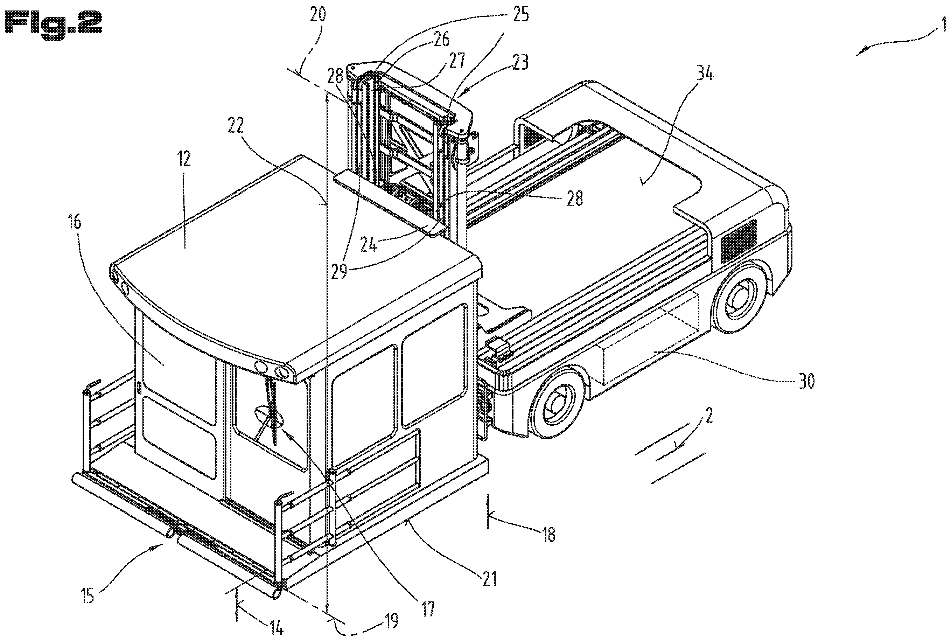

Fig. 2 zeigt eine weitere perspektivische Darstellung des Transportfahrzeuges 1, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

In der Ansicht nach Fig. 2 ist die Transportplattform 12 auf den Boden 2 abgesenkt, um Personen aufnehmen zu können.

Durch das Absenken der Transportplattform 12 auf den Boden 2 kann erreicht werden, dass Personen mit eingeschränkter Mobilität erleichtert in die Transportplattform gelangen können, da eine Stufe 14 auf die Transportplattform 12 möglichst gering sein kann. Die Stufe 14 kann beispielsweise durch eine Rampe oder durch eine Abschrägung, welche an der Transportplattform 12 angeordnet ist, überwunden werden.

Wie aus Fig. 2 ersichtlich, weist die Transportplattform 12 eine Einstiegsöffnung 15 auf, über welche die zu transportierenden Personen die Transportplattform 12 betreten können. Die Einstiegsöffnung 15 ist vorzugsweise an der Vorderseite 8 des Transportfahrzeuges 1 angeordnet und befindet sich somit in Fahrtrichtung 7 gesehen vorne. Weiters kann vorgesehen sein, dass bei einer geschlossenen Transportplattform 12 eine Einstiegstüre 16, beispielsweise eine Schiebetüre, angeordnet ist, mittels welcher der Innenraum der Transportplattform 12 betreten werden kann.

Weiters kann vorgesehen sein, dass ein Führerstand 17 an welchem die Steuerelemente zum Steuern des Transportfahrzeuges 1 angeordnet sind, direkt an der Transportplattform 12 angeordnet ist. Bei einer geschlossenen Transportplattform 12, wie sie in den Figuren 1 bis 3 dargestellt ist, kann beispielsweises vorgesehen sein, dass direkt neben der Einstiegstüre 16 der Führerstand 17 angeordnet ist. Am Führerstand 17 kann ein Sitz zum Aufnehmen des Fahrzeugführers vorgesehen sein. Darüber hinaus sind sämtliche Steuerelemente, zum Steuern des Transportfahrzeuges 1 am Führerstand 17 angeordnet.

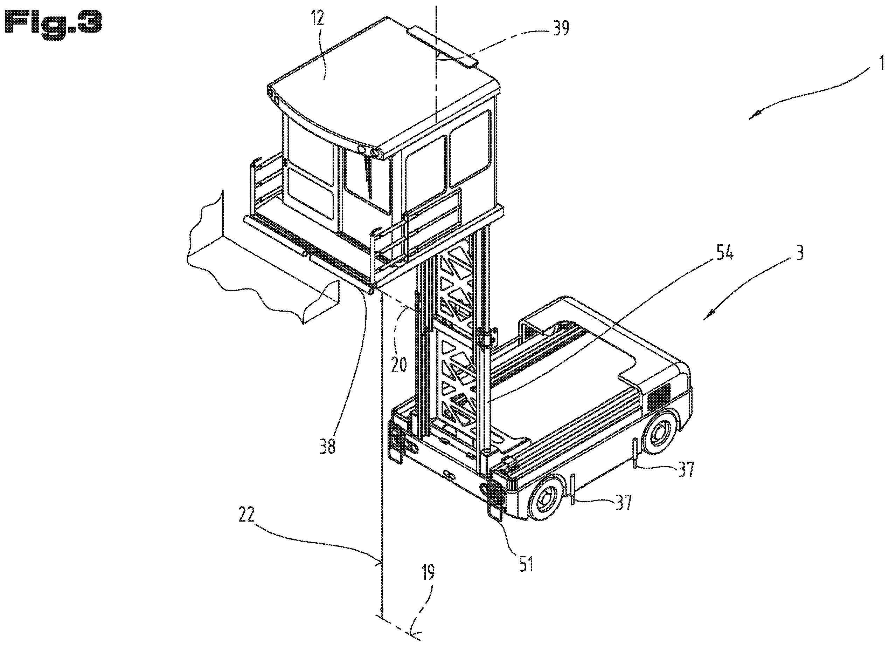

Fig. 3 zeigt eine weitere perspektivische Darstellung des Transportfahrzeuges 1, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in der vorangegangenen Figuren 1 und 2 hingewiesen bzw. Bezug genommen.

In der Ansicht nach Fig. 3 ist die Transportplattform 12 angehoben, um Personen auf einem höhergelegenen Niveau absetzen zu können.

Mittels der Hubvorrichtung 13 kann die Transportplattform 12 in einer vertikalen Richtung 18 zwischen einer abgesenkten Stellung 19 und einer angehobenen Stellung 20 bewegt werden. In der abgesenkten Stellung 19 kann vorgesehen sein, dass eine Unterseite 21 der Transportplattform 12 am Untergrund 2 aufliegt. In der angehobenen Stellung 20 ist die Transportplattform 12 maximal angehoben. Der maximale Hub 22 ergibt sich aus der Differenz zwischen angehobener Stellung 20 und abgesenkter Stellung 19.

Wie besonders gut aus einer Zusammenschau der Fig. 2 und 3 ersichtlich, kann vorgesehen sein, dass die Hubvorrichtung 13 als Hubmasten ausgebildet ist. Der Hubmasten kann ein teleskopierbares Laufschienensystem 23 aufweisen, wodurch die Transportplattform 12 in vertikaler Richtung 18 verstellbar ist. Insbesondere kann vorgesehen sein, dass die Transportplattform 12 an einem Laufwagen 24 angeordnet ist, welcher am Laufschienensystem 23 angeordnet ist. Das Laufschienensystem 23 kann ein erstes Schienenpaar 25 aufweisen, welches direkt nächstliegend zum Laufwagen 24 angeordnet sind. Das erste Schienenpaar 25 kann zwei Einzelschienen 26 aufweisen, welche U-förmig ausgebildet sind und an einem offenen Ende 27 des U zur Aufnahme einer Führungsrolle 28 des Laufwagens 24 ausgebildet sind.

Insbesondere ist vorgesehen, dass am Laufwagen 24 beidseitig jeweils zwei Führungsrollen 28 ausgebildet sind, welche zur Lastaufnahme und zur Momentenaufnahme im Laufwagen 24 dienen. Weiters kann vorgesehen sein, dass das erste Schienenpaar 25 ebenfalls über Führungsrollen in einem zweiten Schienenpaar 29 verschiebbar aufgenommen ist. Dadurch kann die Teleskopfunktion des Hubmastens erreicht werden. Natürlich können auch weitere Schienenpaare vorgesehen sein, um eine Mehrfachteleskopierbarkeit des Hubmastens erreichen zu können.

Weiters kann, wie aus einer Zusammenschau der Fig. 1 und 2 ersichtlich, vorgesehen sein, dass die Transportplattform 12 mitsamt der Hubvorrichtung 13 in Fahrtrichtung 7 relativ zum Fahrgestell 3 zwischen einer Aufnahmestellung 31 und einer Transportstellung 32 verschoben werden kann.

Insbesondere kann vorgesehen sein, dass in der Transportstellung 32 zumindest der Großteil der Transportplattform 12 innerhalb einer projizierten Grundfläche 33 des Fahrgestells 3 angerodnet ist. Weiters kann vorgesehen sein, dass die Transportplattform 12 in Transportstellung 32 mit dessen Unterseite 21 an einer Plattformebene 34 des Fahrgestells 3 abgestellt wird, um beim Verfahren des Transportfahrzeuges 1 die Stabilität der Transportplattform 12 zu erhöhen.

Die Plattformebene 34 ist vorzugsweise oberhalb sämtlicher Räder 6 angeordnet.

Die Transportplattform 12 kann zwischen Aufnahmestellung 31 und Transportstellung 32 um einen Verstellweg 35 in Fahrtrichtung 7 verstellt werden. Der Verstellweg 35 ist so gewählt, dass in der Aufnahmestellung 31 die komplette Transportplattform 12 an die Vorderseite 8 des Fahrgestells 3 über das Fahrgestell 3 hinaus verschoben ist und somit bis auf den Untergrund 2 abgesenkt werden kann. In der Transportstellung 32 ist die Transportplattform 12 soweit in Richtung Hinterseite 9 des Fahrgestells 3 verschoben, dass die Transportplattform 12 oberhalb des Fahrgestells 3 platziert werden kann.

Weiters kann vorgesehen sein, dass eine Energiebereitstellungsvorrichtung 30 ausgebildet ist, welche zum Bereitstellen der Antriebsenergie für das Transportfahrzeug 1 dient. Die Energiebereitstellungsvorrichtung 30 ist vorzugsweise zwischen dem vorderen Radpaar 10 und dem hinteren Radpaar 11 angeordnet und ist darüber hinaus unterhalb der Plattformebene 34 angeordnet. Eine derartige Anordnung der Energiebereitstellungsvorrichtung 30 bringt den Vorteil mit sich, dass zum einen der Schwerpunkt des Personentransportfahrzeuges 1 möglichst niedrig liegt und darüber hinaus die Transportplattform 12 möglichst nahe am Untergrund 2 angeordnet sein kann.

Die Energiebereitstellungsvorrichtung 30 kann beispielsweise in Form eines Verbrennungsmotors ausgebildet sein, welcher beispielsweise mittels einem Getriebe mit den Rädern 6 gekoppelt sein kann. Weiters kann vorgesehen sein, dass an den Verbrennungsmotor ein Generator zum Erzeugen von elektrischer Energie oder ein Hydraulikaggregat gekoppelt ist. Der Generator bzw. das Hydraulikaggregat kann mit Stellmotoren in Form von Elektromotoren oder Hydraulikmotoren gekoppelt sein, welche zum Antrieb der einzelnen beweglichen Bauteile am Transportfahrzeug 1 dienen. Alternativ zu einem Getriebe kann beispielsweise auch der Fahrantrieb der Räder mittels einem Elektromotor bzw. einem Hydraulikmotor realisiert werden. Weiters kann vorgesehen sein, dass der Tank zur Aufnahme des Treibstoffes für den Verbrennungsmotor ebenfalls zwischen dem vorderen Radpaar 10 und dem hinteren Radpaar 11 und darüber hinaus unterhalb der Plattformebene 34 angeordnet ist.

Sämtliche Antriebe des Personentransportfahrzeuges 1 können beispielsweise als Elektromotor, als Hydraulikmotor, als Hydraulikzylinder oder mittels einer mechanischen Verbindung mit einem Motor direktangetrieben sein.

In einer Alternativvariante kann beispielsweise vorgesehen sein, dass die Energiebereitstellungsvorrichtung 30 in Form eines Akkumulators ausgebildet ist, welcher die Antriebsenergie zum Antrieb des Transportfahrzeuges 1 mittels Elektromotoren bereitstellt.

In wieder einer anderen Ausführungsvariante kann beispielsweise vorgesehen sein, dass die Energiebereitstellungsvorrichtung 30 in Form einer Brennstoffzelle ausgebildet ist.

In weiteren Ausführungsvarianten kann vorgesehen sein, dass Kombinationen der vorgenannten Energiebereitstellungseinrichtungen 30 eingesetzt werden, beispielsweise ein Hybridantrieb umfassend einen Dieselmotor, Generator und Akkumulator.

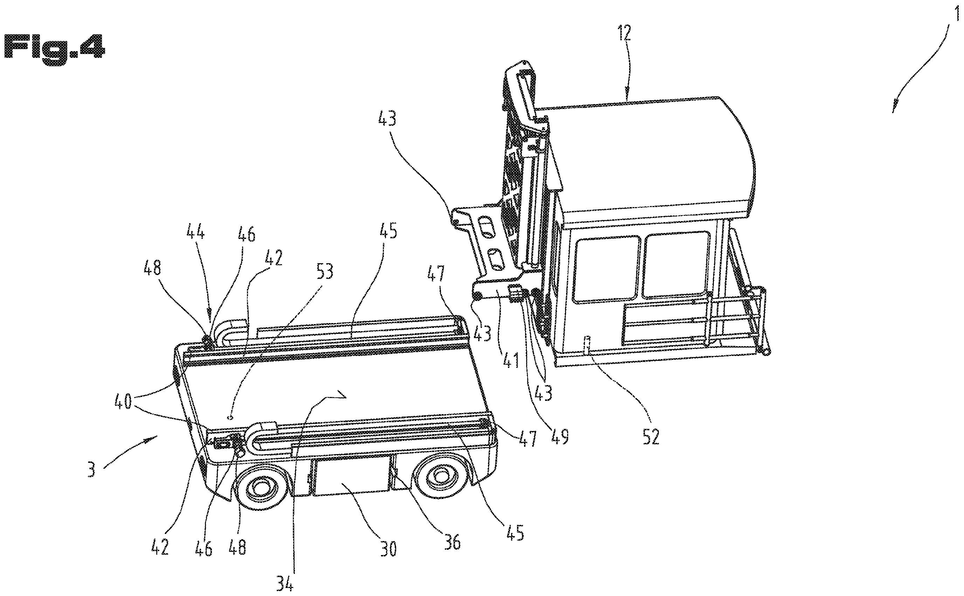

Fig. 4 zeigt eine weitere perspektivische Darstellung des Transportfahrzeuges 1, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

In Fig. 4 sind das Fahrgestell 3 und die Hubvorrichtung 13 mitsamt der Transportplattform 12 in einer Explosionsdarstellung dargestellt.

Wie aus Fig. 4 ersichtlich, kann vorgesehen sein, dass die Energiebereitstellungsvorrichtung 30, insbesondere wenn sie als Akkumulator ausgebildet ist, an einem Auszugsystem 36 angeordnet ist, mittels welchem die Energiebereitstellungsvorrichtung 30 vorzugsweise seitlich aus dem Fahrgestell 3 ausgezogen werden kann. Durch das Auszugsystem 36 kann beispielsweise erreicht werden, dass Akkumulatoren vereinfacht in das Fahrgestell 3 eingewechselt werden können, um beispielsweise einen ersten Akkumulator laden zu können, während ein zweiter Akkumulator im Arbeitseinsatz ist.

Auf Basis einer Zusammenschau der Figuren 1 bis 3 wird im Folgenden der Ablauf zum Befördern von Personen beschrieben. Um mit dem Transportfahrzeug 1 zum gewünschten Aufnahmeort fahren zu können, ist vorgesehen, dass die Transportplattform 12 in Transportstellung 32 angeordnet ist. Hierbei kann vorgesehen sein, dass die Unterseite 21 der Transportplattform 12 an der Plattformebne 34 aufliegt. Ist das Transportfahrzeug 1 am vorgesehenen Aufnahmeort angekommen, so kann die Transportplattform 12 in vertikaler Richtung leicht angehoben werden, um sie von der Plattformebene 34 des Fahrgestells 3 abheben zu können. Anschließend kann die Transportplattform 12 in Fahrtrichtung 7 in die Aufnahmestellung 31 verschoben werden, um in einem weiteren Verfahrensschritt die Transportplattform 12 in vertikaler Richtung 18 in die abgesenkte Stellung 19 hinablassen zu können. In dieser Stellung können die Personen auf die Transportplattform 12 gelangen.

Anschließend kann die Transportplattform 12 soweit angehoben werden, dass die Unterseite 21 der der Transportplattform 12 oberhalb der Plattformebene 34 des Fahrgestells 3 angeordnet ist und somit die Transportplattform 12 entgegen der Fahrtrichtung 7 wieder in die Transportstellung 32 verschoben werden kann. Anschließend kann optional die Transportplattform 12 abgesenkt werden, sodass die Unterseite 21 der Transportplattform 12 an der Plattformebene 34 des Fahrgestells 3 aufliegt. Diese Stellung ist in Fig. 1 dargestellt.

Das Transportfahrzeug 1 befindet sich, somit wieder im Fahrmodus und kann die zu transportierenden Personen oder Gegenstände zu einem Übergabeort oder Arbeitsort befördern. Am Übergabeort bzw. Arbeitsort angekommen, kann die Transportplattform 12 in vertikaler Richtung 18 in Richtung angehobener Stellung 20 bewegt werden, um die transportierten Personen an einem angehobenen Niveau aus der Transportplattform 12 aussteigen lassen zu können. Dies kann beispielsweise die Übergabe der Personen in ein Flugzeug sein.

Zur Übergabe kann die Transportplattform 12 entweder in Aufnahmestellung 31 vorgeschoben sein oder in Transportstellung 32 zentral über dem Fahrgestell 3 positioniert sein. Weiters ist es natürlich auch denkbar, dass die Transportplattform 12 in einer Zwischenstellung zwischen Aufnahmestellung 31 und Transportstellung 32 angeordnet ist. Insbesondere kann vorgesehen sein, dass mittels dem Fahrgestell 3 die Grobpositionierung der Transportplattform 12 relativ zum Flugzeug vorgenommen wird und dass anschließend in angehobener Stellung die Transportplattform 12 in Fahrtrichtung 7 relativ zum Fahrgestell 3 bewegt wird, um die Einstiegsöffnung 15 der Transportplattform 12 möglichst nahe an einer Einstiegsluke des Flugzeuges platzieren zu können.

Weiters kann vorgesehen sein, dass vor dem Anheben der Transportplattform 12 im Fahrgestell 3 angeordnete Stützen 37 ausgefahren werden, um die Stabilität des Transportfahrzeuges 1 erhöhen zu können. Insbesondere kann vorgesehen sein, dass im Fahrgestell 3 an jeder Seite zwei Stützen 37 angeordnet sind.

Weiters kann vorgesehen sein, dass eine Andockrampe 38 an der Transportplattform 12 angeordnet ist, welche relativ zur Transportplattform 12 verschoben werden kann, um einen barrierefreien Übergang zwischen dem Flugzeug und der Transportplattform 12 zu schaffen. Die Andockrampe 38 kann im Boden der Transportplattform 12 integriert sein und aus diesem herausgefahren werden.

Weiters kann vorgesehen sein, dass die Andockrampe 38 mit einem umlaufenden Gehäuse, beispielsweise einem flexiblen Faltbalg gekoppelt ist. Dieser Faltbalg kann direkt an die Einhausung der Transportplattform 12 gekoppelt sein, dadurch kann erreicht werden, dass die Transportplattform 12 an das Flugzeug angedockt werden kann und einen Schutz gegen Witterungseinflüsse bietet.

Weiters kann vorgesehen sein, dass die Transportplattform 12 bezüglich einer Hochachse 39 relativ zum Fahrgestell 3 verdrehbar ist, um beispielsweise die winkelige Lage der Transportplattform 12 an das Flugzeug anpassen zu können. Hierbei kann einerseits vorgesehen sein, dass die Transportplattform 12 relativ zur Hubvorrichtung 13 verdrehbar ist oder dass die Hubvorrichtung 13 mitsamt der Transportplattform 12 relativ zum Fahrgestell 3 verdrehbar ist. Die Verdrehfunktion kann beispielsweise durch eine zentral angeordnete Drehachse mit Drehbolzen realisiert werden, wobei seitlich beispielsweise ein Hydraulikzylinder angeordnet sein kann, welcher für die Einstellung des Verdrehwinkels ausgebildet ist.

Weiters kann vorgesehen sein, dass die Transportplattform 12 quer zur Fahrtrichtung 7 bezüglich dem Fahrgestell 3 verschiebbar ist, um die seitliche Lage der Transportplattform 12 an die Einstiegsöffnung des Flugzeuges anpassen zu können. Mit anderen Worten ausgedrückt kann die Transportplattform 12 mehr in Richtung rechter Seite des Fahrgestells 3 oder mehr in Richtung linker Seite des Fahrgestells 3 verlagert werden. Dies kann beispielsweise dadurch realisiert werden, dass die Transportplattform 12 mittels einem seitlichen Schienensystem mit der Hubvorrichtung 13 gekoppelt ist. In einer Alternativvariante kann vorgesehen sein, dass die Transportplattform 12 mitsamt der Hubvorrichtung 13 über ein seitliches Schienensystem relativ zum Fahrgestell 3 verschiebbar ist.

Wenn nun die zu transportierenden Personen die Transportplattform 12 verlassen haben, kann die Transportplattform 12 zurück in die Fahrstellung befördert werden und das Transportfahrzeug 1 an einen neuen Einsatzort verfahren werden.

Die Funktionalität des Verschiebemechanismus zum Verschieben der Hubvorrichtung 13 zwischen einer Aufnahmestellung 31 und der Transportstellung 32 wird anhand der Fig. 4 erläutert.

Wie aus Fig. 4 ersichtlich, kann vorgesehen sein, dass am Fahrgestell 3 ein Schienensystem 40 angeordnet ist, welches mit einem Führungsschlitten 41 zusammenwirkt, an welchem Führungsschlitten 41 die Hubvorrichtung 13 angeordnet ist. Insbesondere kann vorgesehen sein, dass das Schienensystem 40 zwei Einzelschienen 42 umfasst, welche Einzelschienen 42 U-förmig ausgebildet sind, wobei die offene Seite des U der beiden Einzelschienen 42 einander zugewandt ist. Weiters kann vorgesehen sein, dass am Führungsschlitten 41 pro Seite zumindest zwei Führungsrollen 43 angeordnet sind, welche innerhalb der Einzelschienen 42 aufgenommen und geführt sind. Durch die Beabstandung der Führungsrollen 43 zueinander kann erreicht werden, dass Drehmomente vom Führungsschlitten 41 aufgenommen werden können und in das Schienensystem 40 übertragen werden können. Wie im Ausführungsbeispiel nach Fig. 4 ersichtlich, kann auch vorgesehen sein, dass pro Seite mehrere Führungsrollen 43, beispielsweise drei Führungsrollen 43, angeordnet sein können.

Alternativ zur Ausbildung von Führungsrollen 43 kann vorgesehen sein, dass am Führungsschlitten 41 eine Gleitführung bzw. eine Kugelumlaufführung ausgebildet ist, welche mit dem Schienensystem 40 zusammenwirkt.

Weiters ist eine Antriebsvorrichtung 44 vorgesehen, welche zum Verschieben des Führungsschlittens 41 relativ zum Schienensystem 40 dient. Die Antriebsvorrichtung 44 kann in verschiedensten Arten ausgebildet sein. Beispielsweise kann vorgesehen sein, dass die Antriebsvorrichtung 44 ein Zugmittel 45 umfasst, welches zwischen einer Antriebsrolle 46 und einer Umlenkrolle 47 gespannt ist. Das Zugmittel 45 kann beispielsweis als umlaufender Zahnriemen ausgebildet sein, welcher um die Antriebsrolle 46 und um die Umlenkrolle 47 umläuft und von der Antriebsrolle 46 bewegt wird. Weiters kann vorgesehen sein, dass die Antriebsrolle 46 mit einem Antriebsmotor 48 gekoppelt ist, welcher die Antriebsrolle 46 antreibt.

Das Zugmittel 45 kann in einer Alternativvariante beispielsweise auch in Form eines Seiles oder in Form einer Kette ausgebildet sein. Weiters kann vorgesehen sein, dass am Führungsschlitten 41 eine Klemmvorrichtung 49 angeordnet ist, mittels welcher der Führungsschlitten 41 mit dem Zugmittel 45 bewegungsgekoppelt werden kann.

In einer Alternativvariante kann auch vorgesehen sein, dass die Antriebsvorrichtung 44 beispielsweise durch ein Zahnrad gebildet ist, welches mit einer Zahnstange zusammenwirkt oder dass die Antriebsvorrichtung 44 beispielweise in Form eines Hydraulikzylinders oder einer Bewegungsspindel ausgebildet ist.

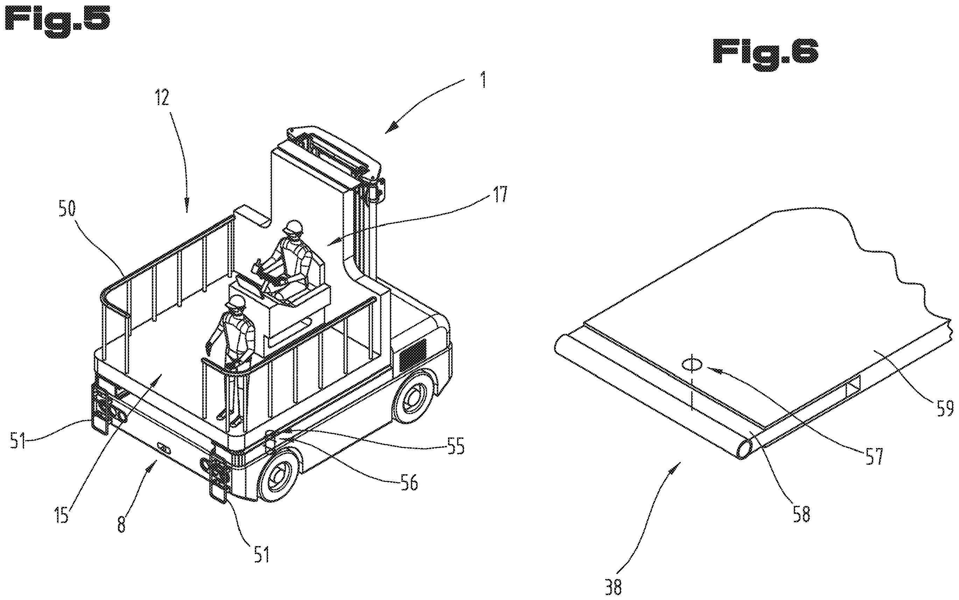

Fig. 5 zeigt ein weiteres Ausführungsbeispiel des Transportfahrzeuges 1, wobei in diesem Ausführungsbeispiel die Transportplattform 12 als offene Plattform ausgebildet ist und ein derartiges Transportfahrzeug 1 beispielsweise für Wartungszwecke eingesetzt werden kann. Das Transportfahrzeug 1 kann derart ausgebildet sein, dass die Transportplattform 12 koppelbar an der Hubvorrichtung 13 angeordnet ist und somit einfach ausgetauscht werden kann. Beispielsweise kann vorgesehen sein, dass an der Hubvorrichtung 13 eine Gabel ausgebildet ist, mittels welcher die Transportplattform 12 aufgenommen werden kann.

Die Transportplattform 12, wie sie in Fig. 5 dargestellt ist, kann eine Absturzsicherung, insbesondere ein Absturzgeländer 50 aufweisen, welches zur Erhöhung der Personensicherheit dient. Das Absturzgeländer 50 kann ebenfalls an der Vorderseite 8 eine Einstiegsöffnung 15 aufweisen.

Der Führerstand 17 kann bei einer derartig ausgebildeten Transportplattform 12 beispielsweise mittig angeordnet sein, um die Übersicht über das Transportfahrzeug 1 bewahren zu können. In einer Alternativvariante kann auch vorgesehen sein, dass der Führerstand 17 an der linken Vorderseite 8 der Transportplattform 12 oder an der rechten Vorderseite 8 der Transportplattform 12 angeordnet ist, um dem Bedienpersonal eine möglichst gute Sicht auf die Vorderseite 8 des Transportfahrzeuges 1 zu ermöglichen.

In einer Alternativvariante kann vorgesehen sein, dass sowohl an der linken Vorderseite 8 als auch an der rechten Vorderseite 8 ein Führerstand 17 angeordnet ist, wobei das Transportfahrzeug 1 wahlweise über einen der beiden Führerstände 17 bedient werden kann.

Unabhängig von der Ausbildung der Transportplattform 12 kann vorgesehen sein, dass an dem Fahrgestell 3 eine oder mehrere Aufstiegsleitern 51 angeordnet sind, welche zum Erreichen der Transportplattform 12 in der Transportstellung 32 dienen.

Weiters kann vorgesehen sein, dass zur Sicherung der Transportplattform 12 an dessen Unterseite 21 ein Fixierelement 52 angeordnet ist, welches mit einem am Fahrgestell 3 angeordneten Gegenelement 53 zusammenwirkt. Das Fixierelement 52 kann beispielsweise in Form eines Bolzens ausgebildet sein und das Gegenelement 53 in Form einer Bohrung, welche mit dem Bolzen zusammenwirkt. Durch ablassen der Transportplattform 12 auf die Plattformebene 34 des Fahrgestells 3 kann das Fixierelement 52 beispielsweise mit dem Gegenelement 53 in eingriff gebracht werden, um ein Verschieben der Transportplattform 12 in Fahrtrichtung 7 zu unterbinden.

Natürlich kann auch vorgesehen sein, dass das Gegenelement 53 an der Transportplattform 12 angeordnet ist und das Fixierelement 52 am Fahrgestell 3 angeordnet ist.

Weiters kann vorgesehen sein, dass die Hubvorrichtung 13 eine mechanische Sicherung aufweist, mittels welcher die Transportplattform 12 gegen Herabfallen im Falle des Versagens des Antriebssystems gesichert werden kann. Die mechanische Sicherung kann beispielsweise in einem Hydraulikzylinder 54 integriert sein, welcher zum Heben der Hubvorrichtung 13 dient.

Wie in Fig. 5 schematisch dargestellt kann weiters vorgesehen sein, dass das Fahrgestell 3 eine Federung 55 und wahlweise eine Dämpfung 56 aufweist.

Die Federung 55 und die Dämpfung 56 können bei allen verschiedenen Ausführungsvarianten des Transportfahrzeuges 1 ausgebildet sein.

Fig. 6 zeigt eine schematische Darstellung eines Ausführungsbeispiels der Andockrampe 38. Wie aus Fig. 6 ersichtlich, kann vorgesehen sein, dass die Andockrampe 38 ein vorderes Segment 58 und ein hinteres Segment 59 aufweist, welche mittels einem vertikalen Drehgelenk 57 miteinander gekoppelt sind, wobei das vordere Segment 58 bezüglich dem hinteren Segment 59 verschwenkbar ist. Beispielsweise kann vorgesehen sein, dass das hintere Segment 59 eine Sandwichbauweise und somit einen Freiraum aufweist und das vordere Segment 58 im Freiraum des hinteren Segmentes 59 aufgenommen ist. Durch einen einfachen Bolzen mit vertikaler Achse, welcher das vordere Segment 58 und das hintere Segment 59 miteinander verbindet kann das vertikale Drehgelenk 57 realisiert werden. Das vordere Segment 58 kann sich beim Anliegen an ein Hindernis frei zum hinteren Segment 59 verdrehen. Weiters kann vorgesehen sein, dass zwischen vorderem Segment 58 und hinterem Segment 59 zumindest ein Rückstellelement, beispielsweise eine Feder angeordnet ist, welche das vordere Segment 58 beim Fehlen einer Auslenkkraft in dessen gerader Grundstellung hält.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist.

Der Schutzbereich ist durch die Ansprüche bestimmt. Die Beschreibung und die Zeichnungen sind jedoch zur Auslegung der Ansprüche heranzuziehen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Transportfahrzeug | 31 | Aufnahmestellung |
| 2 | Untergrund | 32 | Transportstellung |
| 3 | Fahrgestell | 33 | projizierte Grundfläche Fahrgestell |
| 4 | Länge des Fahrgestells | 34 | Plattformebene |
| 5 | Breite Fahrgestell | 35 | Verstellweg in Fahrtrichtung |
| 6 | Rad | 36 | Auszugsystem |
| 7 | Fahrtrichtung | 37 | Stützen |
| 8 | Vorderseite | 38 | Andockrampe |
| 9 | Hinterseite | 39 | Hochachse |
| 10 | orderes Radpaar | 40 | Schienensystem |
| 11 | hinteres Radpaar | 41 | Führungsschlitten |
| 12 | Transportplattform | 42 | Einzelschiene |
| 13 | Hubvorrichtung | 43 | Führungsrollen |
| 14 | Stufe Transportplattform | 44 | Antriebsvorrichtung |
| 15 | Einstiegsöffnung | 45 | Zugmittel |
| 16 | Einstiegstüre | 46 | Antriebsrolle |
| 17 | Führerstand | 47 | Umlenkrolle |
| 18 | vertikale Richtung | 48 | Antriebsmotor |
| 19 | abgesenkte Stellung | 49 | Klemmvorrichtung |
| 20 | angehobene Stellung | 50 | Absturzgeländer |
| 21 | Unterseite Transportplattform | 51 | Aufstiegsleiter |
| 22 | Hub | 52 | Fixierelement |
| 23 | Laufschienensystem | 53 | Gegenelement |
| 24 | Laufwagen | 54 | Hydraulikzylinder |
| 25 | erstes Schienenpaar | 55 | Federung |
| 26 | Einzelschiene erstes Schienenpaar | 56 | Dämpfung |
| 27 | offenes Ende Einzelschiene | 57 | Drehgelenk |
| 28 | Führungsrolle Laufwagen | 58 | vorderes Segment |
| 29 | zweites Schienenpaar | 59 | hinteres Segment |
| 30 | Energiebereitstellungsvorrichtung | | |

## Patentansprüche

1. Selbstfahrendes Transportfahrzeug (1) zum Transport von Personen, umfassend:
ein Fahrgestell (3), welches sich bezüglich dessen Länge (4) in einer Fahrtrichtung (7) erstreckt und bezüglich dessen Breite (5) quer zur Fahrtrichtung (7) erstreckt, wobei zumindest drei Räder (6) am Fahrgestell (3) angeordnet sind, welche Räder (6) im ungelenkten Zustand in Fahrtrichtung (7) ausgerichtet sind;
eine Energiebereitstellungsvorrichtung (30), welche im Fahrgestell (3) aufgenommen ist;
eine Hubvorrichtung (13), welche mit dem Fahrgestell (3) gekoppelt ist;
eine Transportplattform (12) welche mittels der Hubvorrichtung (13) in vertikaler Richtung (18) relativ zum Fahrgestell (3) zwischen einer abgesenkten Stellung (19) und einer angehobenen Stellung (20) verschiebbar ist,
wobei die Transportplattform (12) in Fahrtrichtung (7) relativ zum Fahrgestell (3) zwischen einer Aufnahmestellung (31) und einer Transportstellung (32) verschiebbar ist und eine Antriebsvorrichtung (44) zum Verschieben der Transportplattform (12) in Fahrtrichtung (7) ausgebildet ist,
**dadurch gekennzeichnet, dass** ein Führerstand (17) zum Steuern des selbstfahrenden Transportfahrzeuges (1) an der Transportplattform (12) angeordnet ist und dass die Transportplattform (12) in der Aufnahmestellung (31) in Fahrtrichtung (7) gesehen vor oder hinter dem Fahrgestell (3) auf den Untergrund (2) absenkbar ist.

2. Selbstfahrendes Transportfahrzeug nach Anspruch 1, **dadurch gekennzeichnet, dass** die Transportplattform (12) in der Transportstellung (32) zumindest bereichsweise innerhalb der projizierten Grundfläche (33) des Fahrgestells (3) aufgenommen ist.

3. Selbstfahrendes Transportfahrzeug nach einem der vorhergehenden Ansprüche, **dadurch gekennzeichnet, dass** die Transportplattform (12) in der Transportstellung (32) zumindest zu 70%, bevorzugt zur Gänze, innerhalb der projizierten Grundfläche (33) des Fahrgestells (3) aufgenommen ist und oberhalb dem Fahrgestell (3) angeordnet ist.

4. Selbstfahrendes Transportfahrzeug nach einem der vorhergehenden Ansprüche, **dadurch gekennzeichnet, dass** ein Verstellweg (35) der Transportplattform (12) zwischen der Aufnahmestellung (31) und der Transportstellung (32) zwischen 30% und 200%, insbesondere zwischen 50% und 100%, bevorzugt zwischen 65% und 95% der Länge (4) des Fahrgestells (3) beträgt.

5. Selbstfahrendes Transportfahrzeug nach einem der vorhergehenden Ansprüche, **dadurch gekennzeichnet, dass** die Transportplattform (12) bezüglich einer Hochachse (39) relativ zum Fahrgestell (3) verdrehbar ist.

6. Selbstfahrendes Transportfahrzeug nach einem der vorhergehenden Ansprüche, **dadurch gekennzeichnet, dass** die Transportplattform (12) koppelbar an der Hubvorrichtung (13) angeordnet ist und dadurch verschiedene Transportplattformen (12) an der Hubvorrichtung (13) aufnehmbar sind.

7. Selbstfahrendes Transportfahrzeug nach einem der vorhergehenden Ansprüche, **dadurch gekennzeichnet, dass** als Antriebsvorrichtung (44) zum Verschieben der Transportplattform (12) am Fahrgestell (3) ein zwischen einer Umlenkrolle (47) und einer Antriebsrolle (46) gespanntes Zugmittel (45), insbesondere Zahnriemen, oder zwischen zwei Umlenkrollen (46, 47) gespanntes und mit einem Antriebsmittel gekoppeltes Zugmittel (45),angeordnet ist und dass die Hubvorrichtung (13) mit dem Zugmittel (45) gekoppelt ist und mittels diesem relativ zum Fahrgestell (3) zwischen der Aufnahmestellung (31) und der Transportstellung (32) verschiebbar ist.

8. Selbstfahrendes Transportfahrzeug nach einem der vorhergehenden Ansprüche, **dadurch gekennzeichnet, dass** die Hubvorrichtung (13) teleskopierbar ausgebildet ist.

9. Selbstfahrendes Transportfahrzeug nach einem der vorhergehenden Ansprüche, **dadurch gekennzeichnet, dass** am Fahrgestell (3) ein Schienensystem (40) angeordnet ist und dass an der Hubvorrichtung (13) ein Führungsschlitten (41) mit zumindest vier Führungsrollen (43) angeordnet ist, welche mit dem Schienensystem (40) zusammenwirken.

10. Selbstfahrendes Transportfahrzeug nach einem der vorhergehenden Ansprüche, **dadurch gekennzeichnet, dass** am Fahrgestell (3) eine Plattformebene (34) ausgebildet ist oberhalb welcher die Transportplattform (12) in der Transportstellung (32) angeordnet ist, wobei die Plattformebene (34) oberhalb sämtlicher Räder (6) angeordnet ist.

11. Selbstfahrendes Transportfahrzeug nach einem der vorhergehenden Ansprüche, **dadurch gekennzeichnet, dass** am Fahrgestell (3) ein vorderes Radpaar (10) und ein hinteres Radpaar (11) angeordnet ist, wobei zumindest eines der Radpaare (10, 11) lenkbar ist.

12. Selbstfahrendes Transportfahrzeug nach Anspruch 10 oder 11, **dadurch gekennzeichnet, dass** die Energiebereitstellungsvorrichtung (30) zwischen dem vorderen Radpaar (10) und dem hinteren Radpaar (11) und unterhalb der Plattformebene (34) am Fahrgestell (3) angeordnet ist.

13. Selbstfahrendes Transportfahrzeug nach einem der Ansprüche 10 bis 12, **dadurch gekennzeichnet, dass** die Transportplattform (12) in Transportstellung (32) auf der Plattformebene (34) oder auf dem Schienensystem (40) abstellbar ist.

14. Selbstfahrendes Transportfahrzeug nach einem der vorhergehenden Ansprüche, **dadurch gekennzeichnet, dass** die Breite (5) des Fahrgestells (3) zwischen 50% und 100%, insbesondere zwischen 60% und 90%, bevorzugt zwischen 65% und 75% der Länge (4) des Fahrgestells (3) beträgt.

15. Selbstfahrendes Transportfahrzeug nach einem der vorhergehenden Ansprüche, **dadurch gekennzeichnet, dass** an der Transportplattform (12) in Fahrtrichtung (7) gesehen vorne eine Einstiegsöffnung (15) angeordnet ist.

16. Selbstfahrendes Transportfahrzeug nach einem der vorhergehenden Ansprüche, **dadurch gekennzeichnet, dass** an der Transportplattform (12) eine Andockrampe (38) angeordnet ist, welche relativ zur Transportplattform (12) in Fahrtrichtung (7) verschiebbar ist.

17. Selbstfahrendes Transportfahrzeug nach einem der vorhergehenden Ansprüche, **dadurch gekennzeichnet, dass** die Transportplattform (12) relativ zum Fahrgestell (3) quer zur Fahrtrichtung (7) verschiebbar ist.

18. Selbstfahrendes Transportfahrzeug nach einem der vorhergehenden Ansprüche, **dadurch gekennzeichnet, dass** die Hubvorrichtung (13) eine mechanische Sicherung aufweist, mittels welcher die Transportplattform (12) gegen Herabfallen im Falle des Versagens des Antriebssystems gesichert werden kann.

19. Selbstfahrendes Transportfahrzeug nach einem der vorhergehenden Ansprüche, **dadurch gekennzeichnet, dass** das Transportfahrzeug (1) mittels einem Übertragungsmittel von einer vom Transportfahrzeug (1) entfernten Position aus steuerbar ist.

20. Selbstfahrendes Transportfahrzeug nach einem der vorhergehenden Ansprüche, **dadurch gekennzeichnet, dass** das Fahrzeug mit einer außerhalb des Transportfahrzeug (1) befindlichen Datenverarbeitungsanlage in Verbindung steht und von dieser steuerbar ist.

21. Selbstfahrendes Transportfahrzeug nach einem der vorhergehenden Ansprüche, **dadurch gekennzeichnet, dass** das Fahrgestell (3) eine Federung (55) und wahlweise eine Dämpfung (56) aufweist.

22. Selbstfahrendes Transportfahrzeug nach einem der vorhergehenden Ansprüche, **dadurch gekennzeichnet, dass** ein Abstand zwischen zumindest einem der Räder (6) und dem Fahrgestell (3) aktiv verstellbar ist.

23. Selbstfahrendes Transportfahrzeug nach einem der vorhergehenden Ansprüche, **dadurch gekennzeichnet, dass** die Transportplattform (12) derart mit der Hubvorrichtung (13) gekoppelt ist, sodass die Transportplattform (12) relativ zur Hubvorrichtung (13) seitlich verschiebbar ist und/oder sodass die Transportplattform (12) relativ zur Hubvorrichtung (13) um eine vertikale Achse verschwenkbar ist und/oder sodass die Transportplattform (12) relativ zur Hubvorrichtung (13) um eine horizontale Achse verschwenkbar ist.

24. Selbstfahrendes Transportfahrzeug nach einem der vorhergehenden Ansprüche, **dadurch gekennzeichnet, dass** die Hubvorrichtung (13) ein Federungs- und optional ein Dämpfungssystem aufweist mittels welchem vertikale Stöße zwischen Fahrgestell (3) und Transportplattform (12) gefedert bzw. gedämpft werden können.

25. Selbstfahrendes Transportfahrzeug nach einem der Ansprüche 16-24, **dadurch gekennzeichnet, dass** die Andockrampe (38) segmentiert ist und ein vertikales Drehgelenk (57) aufweist, wobei ein vorderes Segment (58) der Andockrampe (38) bezüglich einem hinteren Segment (59) der Andockrampe (38) verschwenkbar ist.

## Claims

1. A self-driving transport vehicle (1) for transporting people, comprising:
a chassis (3), which extends in a driving direction (7) with respect to its length (4) and extends transversely to the driving direction (7) with respect to its width (5), wherein at least three wheels (6) are arranged on the chassis (3), which wheels (6); in an unsteered state; are oriented in the driving direction (7);
an energy provision device (30), which is accommodated in the chassis (3);
a lifting device (13), which is coupled with the chassis (3);
a transport platform (12), which is displaceable, by means of the lifting device (13), between a lowered position (19) and a raised position (20) in a vertical direction (18) relative to the chassis (3),
wherein the transport platform (12) is displaceable between a receiving position (31) and a transport position (32) in the driving direction (7) relative to the chassis (3) and a drive device (44) for displacement of the transport platform (12) in the driving direction (7) is formed,
**characterized in that** a cockpit (17) for controlling the self-driving transport vehicle (1) is arranged on the transport platform (12) and that the transport platform (12), when in the receiving position (31), can be lowered to the ground (2) in front of or behind the chassis (3) when viewed in the driving direction (7).

2. The self-driving transport vehicle according to claim 1, **characterized in that** the transport platform (12), when in the transport position (32), is accommodated at least sectionally within the projected base area (33) of the chassis (3).

3. The self-driving transport vehicle according to one of the preceding claims, **characterized in that** the transport platform (12), when in the transport position (32), is accommodated at at least 70 %, preferably entirely, within the projected base area (33) of the chassis (3) and is arranged above the chassis (3).

4. The self-driving transport vehicle according to one of the preceding claims, **characterized in that** an adjustment track (35) of the transport platform (12) between the receiving position (31) and the transport position (32) amounts to between 30 % and 200 %, in particular between 50 % and 100 %, preferably between 65 % and 95 %, of the length (4) of the chassis (3).

5. The self-driving transport vehicle according to one of the preceding claims, **characterized in that** the transport platform (12) is rotatable with respect to a vertical axis (39) relative to the chassis (3).

6. The self-driving transport vehicle according to one of the preceding claims **characterized in that** the transport platform (12) is arranged on the lifting device (13) so as to be able to be coupled and thereby different transport platforms (12) can be accommodated on the lifting device (13).

7. The self-driving transport vehicle according to one of the preceding claims, **characterized in that**, as the drive device (44) for displacement of the transport platform (12), a traction means (45) tensioned between a deflection roller (47) and a drive roller (46), in particular timing belt, or a traction means (45) tensioned between two deflection pulleys (46, 47) and coupled with a drive means is arranged on the chassis (3), and that the lifting device (13) is coupled with the traction means (45) and, by means of which this, is displaceable between the receiving position (31) and the transport position (32) relative to the chassis (3).

8. The self-driving transport vehicle according to one of the preceding claims **characterized in that** the lifting device (13) is formed to be telescopic.

9. The self-driving transport vehicle according to one of the preceding claims, **characterized in that** a rail system (40) is arranged on the chassis (3) and that a guide carriage (41) having at least four guide rollers (43) is arranged on the lifting device (13), which guide rollers (43) cooperate with the rail system (40).

10. The self-driving transport vehicle according to one of the preceding claims, **characterized in that** a platform plane (34) is formed on the chassis (3), above which the transport platform (12) is arranged in the transport position (32), wherein the platform plane (34) is arranged above all wheels (6).

11. The self-driving transport vehicle according to one of the preceding claims, **characterized in that** a front pair of wheels (10) and a rear pair of wheels (11) are arranged on the chassis (3), wherein at least one of the pairs of wheels (10, 11) can be steered.

12. The self-driving transport vehicle according to claim 10 or 11, **characterized in that** the energy provision device (30) is arranged on the chassis (3) between the front pair of wheels (10) and the rear pair of wheels (11) and below the platform plane (34).

13. The self-driving transport vehicle according to one of claims 10 to 12, **characterized in that** the transport platform (12), when in the transport position (32), can be parked on the platform plane (34) or on the rail system (40).

14. The self-driving transport vehicle according to one of the preceding claims, **characterized in that** the width (5) of the chassis (3) amounts to between 50 % and 100 %, in particular between 60 % and 90 %, preferably between 65 % and 75 %, of the length (4) of the chassis (3).

15. The self-driving transport vehicle according to one of the preceding claims, **characterized in that** an access opening (15) is arranged on the front of the transport platform (12) when viewed in the driving direction (7).

16. The self-driving transport vehicle according to one of the preceding claims, **characterized in that** a docking ramp (38) is arranged on the transport platform (12), which ramp is displaceable in the driving direction (7) relative to the transport platform (12).

17. The self-driving transport vehicle according to one of the preceding claims, **characterized in that** the transport platform (12) is displaceable transversely to the driving direction (7) relative to the chassis (3).

18. The self-driving transport vehicle according to one of the preceding claims, **characterized in that** the lifting device (13) has a mechanical safeguard, by means of which the transport platform (12) can be safeguarded against falling down in the case of failure of the drive system.

19. The self-driving transport vehicle according to one of the preceding claims, **characterized in that** the transport vehicle (1) can be controlled from a position that is distant from the transport vehicle (1) by means of a transmission means.

20. The self-driving transport vehicle according to one of the preceding claims, **characterized in that** the vehicle is connected to a data processing system, which is located outside the transport vehicle (1), and can be controlled by said system.

21. The self-driving transport vehicle according to one of the preceding claims, **characterized in that** the chassis (3) has a suspension (55) and, optionally, a damping (56).

22. The self-driving transport vehicle according to one of the preceding claims, **characterized in that** a distance between at least one of the wheels (6) and the chassis (3) can be actively adjusted.

23. The self-driving transport vehicle according to one of the preceding claims, **characterized in that** the transport platform (12) is coupled with the lifting device (13), such that the transport platform (12) is laterally displaceable relative to the lifting device (13), and/or such that the transport platform (12) is pivotable relative to the lifting device (13) about a vertical axis, and/or such that the transport platform (12) is pivotable relative to the lifting device (13) about a horizontal axis.

24. The self-driving transport vehicle according to one of the preceding claims, **characterized in that** the lifting device (13) has a suspension system and optionally a damping system, by means of which vertical impacts between the chassis (3) and the transport platform (12) can be cushioned and/or damped.

25. The self-driving transport vehicle according to one of claims 16-24, **characterized in that** the docking ramp (38) is segmented and has a vertical revolute joint (57), wherein a front segment (58) of the docking ramp (38) is pivotable with respect to a rear segment (59) of the docking ramp (38).

## Revendications

1. Véhicule de transport (1) automoteur destiné au transport de personnes, comprenant :
un châssis (3), lequel s'étend dans un sens de la marche (7) par rapport à sa longueur (4) et s'étend transversalement au sens de la marche (7) par rapport à sa largeur (5), au moins trois roues (6) étant disposées sur le châssis (3), lesquelles roues (6) sont orientées dans le sens de la marche (7) dans l'état non guidé ;
un dispositif de fourniture d'énergie (30), lequel est logé dans le châssis (3) ;
un dispositif de levage (13), lequel est couplé au châssis (3) ;
une plateforme de transport (12), laquelle peut, au moyen du dispositif de levage (13), coulisser dans la direction verticale (18) relativement au châssis (3) entre une position abaissée (19) et une position relevée (20),
la plateforme de transport (12) pouvant coulisser dans le sens de la marche (7) relativement au châssis (3) entre une position de réception (31) et une position de transport (32), et un dispositif d'entraînement (44) étant constitué pour le coulissement de la plateforme de transport (12) dans le sens de la marche (7),
**caractérisé en ce qu'**un poste de conduite (17) est disposé sur la plateforme de transport (12) pour la commande du véhicule de transport (1) automoteur, et **en ce que** la plateforme de transport (12), dans la position de réception (31), peut être abaissée sur le sol (2) devant ou derrière le châssis (3), vu dans le sens de la marche (7).

2. Véhicule de transport automoteur selon la revendication 1, **caractérisé en ce que**, dans la position de transport (32), la plateforme de transport (12) est logée au moins par tronçons à l'intérieur de la surface de base (33) projetée du châssis (3).

3. Véhicule de transport automoteur selon l'une des revendications précédentes, **caractérisé en ce que**, dans la position de transport (32), la plateforme de transport (12) est logée au moins à 70%, de préférence totalement, à l'intérieur de la surface de base (33) projetée du châssis (3) et est disposée au-dessus du châssis (3).

4. Véhicule de transport automoteur selon l'une des revendications précédentes, **caractérisé en ce qu'**une course de déplacement (35) de la plateforme de transport (12) entre la position de réception (31) et la position de transport (32) représente entre 30% et 200%, en particulier entre 50% et 100%, de préférence entre 65% et 95% de la longueur (4) du châssis (3).

5. Véhicule de transport automoteur selon l'une des revendications précédentes, **caractérisé en ce que** la plateforme de transport (12) peut être tournée par rapport à un axe vertical (39) relativement au châssis (3).

6. Véhicule de transport automoteur selon l'une des revendications précédentes, **caractérisé en ce que** la plateforme de transport (12) est disposée de façon à pouvoir être couplée sur le dispositif de levage (13) et, de ce fait, différentes plateformes de transport (12) peuvent être logées sur le dispositif de levage (13).

7. Véhicule de transport automoteur selon l'une des revendications précédentes, **caractérisé en ce que**, en tant que dispositif d'entraînement (44) pour le coulissement de la plateforme de transport (12) sur le châssis (3), il est disposé un moyen de traction (45) tendu entre un rouleau de renvoi (47) et un rouleau d'entraînement (46), en particulier une courroie dentée, ou un moyen de traction (45) tendu entre deux rouleaux de renvoi (46, 47) et couplé à un moyen d'entraînement, et **en ce que** le dispositif de levage (13) est couplé au moyen de traction (45) et peut coulisser au moyen de celui-ci relativement au châssis (3) entre la position de réception (31) et la position de transport (32).

8. Véhicule de transport automoteur selon l'une des revendications précédentes, **caractérisé en ce que** le dispositif de levage (13) est constitué de façon télescopique.

9. Véhicule de transport automoteur selon l'une des revendications précédentes, **caractérisé en ce qu'**un système de rail (40) est disposé sur le châssis (3) et **en ce que**, sur le dispositif de levage (13), il est disposé un chariot de guidage (41) avec au moins quatre rouleaux de guidage (43) qui coopèrent avec le système de rail (40).

10. Véhicule de transport automoteur selon l'une des revendications précédentes, **caractérisé en ce que**, sur le châssis (3), il est constitué un niveau de plateforme (34) au-dessus duquel la plateforme de transport (12) est disposée dans la position de transport (32), le niveau de plateforme (34) étant disposé au-dessus de toutes les roues (6).

11. Véhicule de transport automoteur selon l'une des revendications précédentes, **caractérisé en ce qu'**une paire de roues avant (10) et une paire de roues arrière (11) sont disposées sur le châssis (3), au moins une des paires de roues (10, 11) étant directrice.

12. Véhicule de transport automoteur selon la revendication 10 ou 11, **caractérisé en ce que** le dispositif de fourniture d'énergie (30) est disposé entre la paire de roues avant (10) et la paire de roues arrière (11) et au-dessous du niveau de plateforme (34) sur le châssis (3).

13. Véhicule de transport automoteur selon l'une des revendications 10 à 12, **caractérisé en ce que**, dans la position de transport (32), la plateforme de transport (12) peut être posée sur le niveau de plateforme (34) ou sur le système de rail (40).

14. Véhicule de transport automoteur selon l'une des revendications précédentes, **caractérisé en ce que** la largeur (5) du châssis (3) représente entre 50% et 100%, en particulier entre 60% et 90%, de préférence entre 65% et 75% de la longueur (4) du châssis (3).

15. Véhicule de transport automoteur selon l'une des revendications précédentes, **caractérisé en ce qu'**une ouverture d'accès (15) est disposée sur la plateforme de transport (12) à l'avant vu dans le sens de la marche (7).

16. Véhicule de transport automoteur selon l'une des revendications précédentes, **caractérisé en ce que**, sur la plateforme de transport (12), il est disposé une rampe d'amarrage (38) qui peut coulisser dans le sens de la marche (7) relativement à la plateforme de transport (12).

17. Véhicule de transport automoteur selon l'une des revendications précédentes, **caractérisé en ce que** la plateforme de transport (12) peut coulisser transversalement au sens de la marche (7) relativement au châssis (3).

18. Véhicule de transport automoteur selon l'une des revendications précédentes, **caractérisé en ce que** le dispositif de levage (13) comporte un blocage mécanique au moyen duquel la plateforme de transport (12) peut être empêchée de tomber en cas de défaillance du système d'entraînement.

19. Véhicule de transport automoteur selon l'une des revendications précédentes, **caractérisé en ce que** le véhicule de transport (1) peut être piloté au moyen d'un moyen de transmission à partir d'une position éloignée du véhicule de transport (1).

20. Véhicule de transport automoteur selon l'une des revendications précédentes, **caractérisé en ce que** le véhicule est en liaison avec une installation de traitement de données située à l'extérieur du véhicule de transport (1) et peut être piloté par celle-ci.

21. Véhicule de transport automoteur selon l'une des revendications précédentes, **caractérisé en ce que** le châssis (3) comporte une suspension (55) et au choix un amortissement (56).

22. Véhicule de transport automoteur selon l'une des revendications précédentes, **caractérisé en ce qu'**un intervalle entre au moins une des roues (6) et le châssis (3) peut être réglé activement.

23. Véhicule de transport automoteur selon l'une des revendications précédentes, **caractérisé en ce que** la plateforme de transport (12) est couplée au dispositif de levage (13) de telle sorte que la plateforme de transport (12) peut coulisser latéralement relativement au dispositif de levage (13), et/ou de telle sorte que la plateforme de transport (12) peut pivoter relativement au dispositif de levage (13) autour d'un axe vertical, et/ou de telle sorte que la plateforme de transport (12) peut pivoter relativement au dispositif de levage (13) autour d'un axe horizontal.

24. Véhicule de transport automoteur selon l'une des revendications précédentes, **caractérisé en ce que** le dispositif de levage (13) comporte un système de suspension et en option un système d'amortissement au moyen duquel des chocs verticaux entre le châssis (3) et la plateforme de transport (12) peuvent être suspendus ou respectivement amortis.

25. Véhicule de transport selon l'une des revendications 16-24, **caractérisé en ce que** la rampe d'amarrage (38) est segmentée et comporte un pivot (57) vertical, un segment avant (58) de la rampe d'amarrage (38) pouvant pivoter par rapport à un segment arrière (59) de la rampe d'amarrage (38).
